# EUROPÄISCHE PATENTSCHRIFT

(11) **EP 1 040 613 B1**
(45) Veröffentlichungstag und Bekanntmachung des Hinweises auf die Patenterteilung: **15.02.2012**
(21) Anmeldenummer: 98961053.0
(22) Anmeldetag: 30.10.1998
(51) Int. Cl.: H04L 1/12, G01S 13/82

(54) **GERICHTETES NAHBEREICHS-KOMMUNIKATIONSVERFAHREN (DSRC) UND TRANSPONDER HIERFÜR**
DEDICATED SHORT RANGE COMMUNICATION PROCESS AND TRANSPONDER FOR IMPLEMENTING THE SAME
PROCEDE DE COMMUNICATION SUR COURTE DISTANCE SPECIALISEE (DSRC) ET TRANSPONDEUR A CET EFFET

(30) Priorität: 12.11.1997 DE 19750047
(43) Veröffentlichungstag der Anmeldung: 04.10.2000
(73) Patentinhaber: ROBERT BOSCH GMBH, 70442 Stuttgart (DE)
(72) Erfinder: GRABOW, Wilhelm, D-31139 Hildesheim (DE); WIXFORTH, Thomas, D-31139 Hildesheim (DE); DETLEFSEN, Wolfgang, D-31139 Hildesheim (DE)
(86) Internationale Anmeldenummer: PCT/DE1998/003176
(87) Internationale Veröffentlichungsnummer: WO 1999/025087

(56) Entgegenhaltungen:
- EP-A- 0 423 485
- WO-A-90/06637
- WO-A-95/06261
- DE-A- 4 333 964

## Beschreibung

Die Erfindung betrifft ein gerichtetes Nahbereichs-Kommunikationsverfahren (DSRC) sowie einen Transponder hierfür, mit den weiteren Merkmalen der Oberbegriffe der Ansprüche 1 bzw. 5.

Für verschiedene Anwendungsfälle sind unterschiedliche gerichtete Nahbereichs-Kommunikationsverfahren bekannt. Zu diesen Anwendungsfällen gehören beispielsweise eine elektronische Zugangskontrolle für Fahrzeuge oder Personen, das elektronische Abrechnen von Wegegebühren, beispielsweise zum automatisierten Abrechnen von Maut-Gebühren für die Benutzung von Autobahnen oder Tunnels, oder das Übermitteln von Verkehrsinformationen an fahrende Kraftfahrzeuge. Diese Nahbereichs-Kommunikationsverfahren werden allgemein mit der Abkürzung DSRC bezeichnet, nach der englischen Bezeichnung "Dedicated Short Range Communication". Allen diesen Verfahren ist gemeinsam, daß fest installierte Baken über Radiowellen Informationen zu einer als Transponder ausgeführten bordeigenen Einheit (OBU = on-board-unit) übermitteln können (Downlink). Zum Übermitteln von Informationen vom jeweiligen Fahrzeug o.ä. zu der Bake, beispielsweise angeordnet oberhalb einer Mautstelle o.ä., sendet die Bake einen unmodulierten Träger, der vom Transponder empfangen und mit einem Nachrichtensignal moduliert wieder zurückgesendet wird. Für Kraftfahrzeug-Applikationen, beispielsweise für die automatische Abrechnung von Autobahngebühren o.ä. werden insbesondere Systeme mit Wellenlängen im ISM-Band verwendet. Insbesondere das Unterband von 5,795 bis 5,805 GHz mit zwei 5 MHz breiten Kanälen und einer Trägerwelle von 5,8 GHz ist für Verkehrstelematikanwendungen vorgesehen.

Für eine massenweise Anwendung, insbesondere in Kraftfahrzeugen, ist es notwendig, daß die bordeigenen Einheiten (OBU's) einfach, leicht und billig konstruiert sind, so daß die Anschaffungs- und Betriebskosten für ein solches Gerät gering sind. Die notwendige Infrastruktur soll auf die Baken konzentriert werden.

Bei sehr einfachen bordeigenen Einheiten in Form von Transpondern, ist die Leistung der Seitenbandsignale der vom Transponder zurückgesendeten, modulierten Welle naturgemäß abhängig von der Leistungsdichte, die die von der Bake kommende Trägerwelle am Ort des Transponders besitzt.

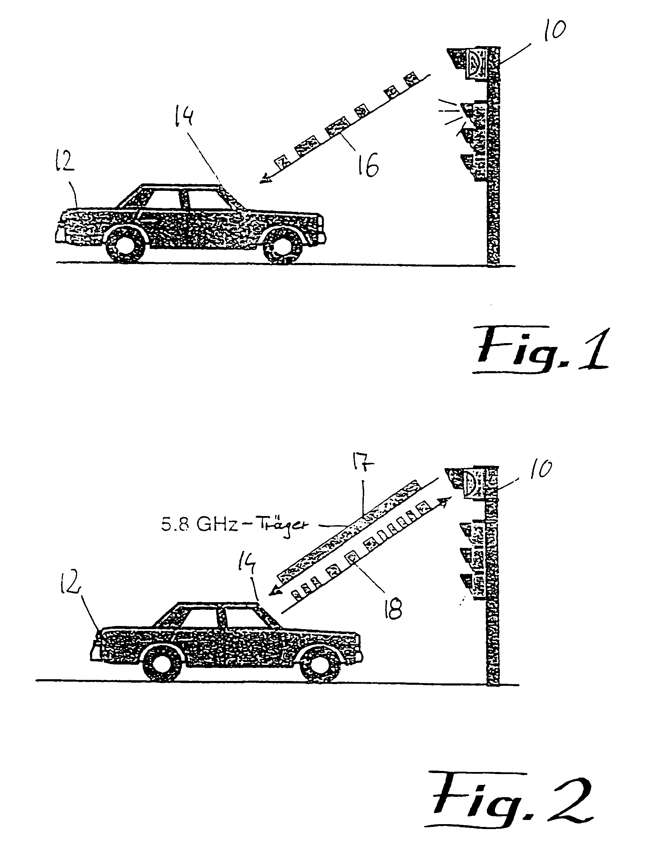

Figuren 1 und 2 zeigen in schematisierter Darstellung ein an eine Funkbake 10 heranrollendes Kraftfahrzeug 12. Beispielsweise im Bereich des Innenrückspiegels ist eine nicht näher dargestellte OBU, d.h. ein bordeigener Transponder 14, angeordnet.

Beim sogenannten "Downlink", d.h. dem Übermitteln von Informationen von der Funkbake 10 zum Kraftfahrzeug 12 bzw. Transponder 14 wird eine modulierte Trägerwelle 16, beispielsweise der Frequenz 5,8 GHz, verwendet.

Figur 2 zeigt schematisch den sogenannten "Uplink", d.h. das Übermitteln von Informationen vom Kfz 12 zur Funkbake 10. Der von der Funkbake ausgesendete unmodulierte 5,8 GHz-Träger wird im Transponder 14 mit einem Nachrichtensignal moduliert, so daß die reflektierte bzw. zurückgesandte, modulierte Trägerwelle 18 die notwendigen Informationen, beispielsweise zur Fahrzeugidentifizierung o.ä. zur Bake 10 überträgt.

In bestimmten Ausnahmesituationen kann der Abstand zwischen Transponder 14 und Bake 10 so klein sein, daß es zu zu hohen, störenden Leistungspegeln der Uplinksignale aufgrund einer zu hohen Leistungsdichte des unmodulierten Trägers am Ort des Transponders kommt. Dies kann beispielsweise dann der Fall sein, wenn ein Transponder an einem höheren Fahrzeug, beispielsweise einem Lkw, in ungünstiger Position angebracht ist.

Aus dem Stand der Technik sind Lösungen bekannt, wie beispielsweise die sogenannte automatische Empfangsstärkensteuerung, bekannt unter dem Akronym "AGC" (Automatic Gain Control). Der Nachteil einer solchen bekannten Schaltung zur Vergleichmäßigung der Stärke eines empfangenen Signals, wie es beispielsweise in hochwertigen Rundfunkempfängern eingesetzt wird, ist darin zu sehen, daß der Bauaufwand und damit die Herstellungskosten zu hoch sind. Eine AGC-Schaltung läuft daher der Zielsetzung zuwider, ein möglichst einfaches und preisgünstiges, massenweise einsetzbares Gerät als Transponder zur Verfügung zu haben.

Weiterhin sind aus dem Stand der Technik sogenannte Limiter-Dioden bekannt, bei denen sich jedoch nachteilige Oberwellen bilden.

Die DE-A-4 333 964 zeigt einen mit einer AGC-Schaltung ausgestatteten Transponder. Dabei wird der Leistungspegel des empfangenen, modulierten Signals gemessen und in Abhängigkeit vom Überschreiten eines Schwellwertes der Leistungspegel der zurückzusendenden Welle kontrolliert.

Der Erfindung liegt daher die Aufgabe zugrunde, ein gattungsgemäßes Verfahren so zu verbessern, daß auch bei ungünstigen räumlichen Konstellationen von Bake und Transponder zu hohe Uplinkpegel vermieden werden und die für das Verfahren vorzusehenden Transponder sich durch einen einfachen Aufbau und demgemäß niedrige Gestehungskosten auszeichnen.

Des erfindungsgemäße Verfahren ist dadurch gekennzeichnet, daß
- in einem Schritt der Leistungspegel des empfangenen, modulierten Signales gemessen und in Abhängigkeit von Über- oder Unterschreiten eines Schwellwertes
- die rückgesendete Trägerwelle mit einer in Abhängigkeit von dem gemessenen Leistungspegel bestimmten Modulationstiefe, die stufenweise gewählt werden kann, moduliert wird.

Der erfindungsgemäße Transponder ist gekennzeichnet durch Mittel zum stufenweisen Einstellen des Modulationsgrades.

Bevorzugt ist insbesondere vorgesehen, daß die Empfangseinheit einen Schwellwertgeber (3) aufweist, der bei Überschreiten eines Schwellwertes für die empfangene, gegebenenfalls modulierte, Trägerwelle ein Steuersignal zum Einstellen des Modulationsgrades generiert.

Um einen besonders billigen und einfachen Aufbau zu ermöglichen, der beispielsweise für Anwendungen in Kraftfahrzeugen zur automatischen Mautberechnung ausreicht, ist erfindungsgemäß bevorzugt insbesondere vorgesehen, daß der Modulator genau zwei verschiedene, voreingestellte Modulationsgrade aufweist.

Die Erfindung wird im folgenden anhand eines in der Zeichnung näher dargestellten Ausführungsbeispieles erläutert. In der Zeichnung zeigen:
- Figur 1 -: eine schematische Darstellung eines mit einer OBU ausgerüsteten, an eine Bake sich annähernden Kraftfahrzeuges während der Downlink-Phase,
- Figur 2 -: das Kraftfahrzeug gemäß Figur 1 während der Uplink-Phase,
- Figur 3 -: eine schematische Darstellung eines erfindungsgemäßen Transponders, und
- Figur 4 -: eine schematische Darstellung verschiedener Modulationsgrade.

Figuren 1 und 2 sind bereits in der Beschreibungseinleitung erläutert worden.

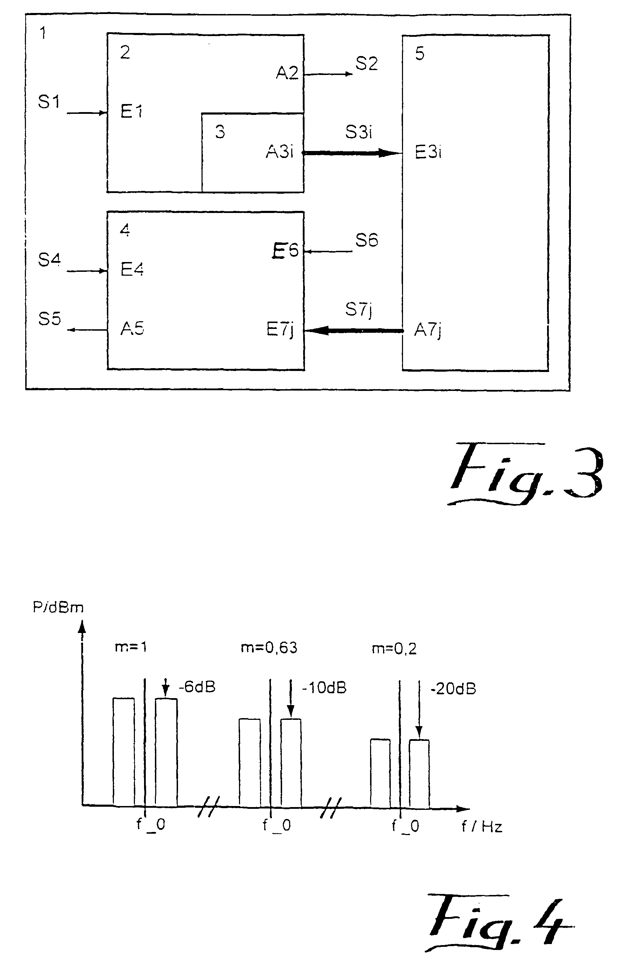

Figur 3 zeigt einen erfindungsgemäßen Transponder 1 mit Mitteln zur Leistungsbegrenzung der Seitenbandsignale am Sendeausgang A5.

Der Transponder 1 weist ein Empfangsteil 2 mit einem Schwellwertgeber 3 auf, sowie weiter einen Modulator 4 und erfindungsgemäß eine Steuereinheit 5.

Der Empfänger 2 besitzt einen Eingang E1 für ein moduliertes Signal S1 (Bezugszeichen 16 in Figur 1) und einen Ausgang A2 für ein entsprechendes demoduliertes Signal S2. Die im Signal S2 enthaltenen Informationen, beispielsweise die Kennung einer Bake o.ä. können in einem nicht dargestellten Mikroprozessor weiter verarbeitet werden.

Weiterhin besitzt der Empfänger 2 einen oder mehrere Ausgänge A3. (i = 1 ... bis I). Diese Ausgänge dienen zur Übermittlung von Steuersignalen S3ᵢ des integrierten Schwellwertgebers 3, die signalisieren, ob das Signal S1 bestimmte Leistungspegel über- oder unterschreitet.

So kann der Schwellwertgeber 3 als einfacher Schmitt-Trigger ausgebildet sein, d.h. es wird lediglich das Überschreiten eines Schwellwertes erfaßt, gleichbedeutend mit einem zu geringen Abstand (vgl. Figur 2) von OBU 14 bzw. Transponder 1 von Bake/Sender 10.

Der Modulator 4 besitzt einen Eingang E4 für ein unmoduliertes Trägersignal S4 (5,8 GHz-Träger in Figur 2) und einen Ausgang A5 für ein moduliertes Signal S5, mit Hilfe dessen während der Uplink-Phase Informationen vom Kfz 12 zur Bake 10 (Figur 2) übertragen werden.

Gegebenenfalls können die beiden Signale S4 und S5 an einem Tor anliegen. Weiterhin besitzt der Modulator einen Eingang E6 für ein Modulationssignal S6, das beispielsweise von einem nicht dargestellten Mikroprozessor generiert werden kann und beispielsweise die Kennung des Kraftfahrzeuges 12, ein Guthaben in Verrechnungseinheiten o.ä. signalisieren bzw. darstellen kann. Der Modulator kann in verschiedenen Stufen auf jeweils einen anderen Modulationsgrad eingestellt werden. Zur Einstellung sind entweder ein oder mehrere Eingänge E7ⱼ (j = 1 ... J) vorgesehen. Die Leistung des modulierten Ausgangssignals S5 ist (in spezifizierten Grenzen) proportional zur Leistung des Trägersignals S4. Eine Modulation des Trägers S4 findet nur statt, wenn das Modulationssignal S6 vorhanden ist.

Das Steuerungsteil 5 verarbeitet die Signale S3ᵢ und S7ⱼ.

Erfindungsgemäß ist vorgesehen, daß die Differenz der Leistungspegel (in dBm) der Signale S1 (vom Empfangsteil 2 empfangene, modulierte Trägerwelle) und S4 (vom Modulator 4 empfangene, unmodulierte Trägerwelle) innerhalb bestimmter Toleranzen gehalten wird. Da zum Zeitpunkt der Entscheidung über den zu wählenden Modulationsgrad, nämlich dann, wenn die Steuerung eine Schwellwert/Über- oder Unterschreitung registriert, aufgrund des sich bewegenden Fahrzeuges der genaue Leistungspegel des Signals S4 nicht genau bekannt ist, setzt das erfindungsgemäße Verfahren zur Leistungsbegrenzung der Seitenbandsignale im modulierten Signal S5 an Modulatorausgang A5 strenggenommen voraus, daß die Differenz der Leistungspegel des Signals S1 zum Zeitpunkt (a) "Steuerung registriert Schwellwertüber/- unterschreitung" und des Signals S4 im Zeitinterval (b) "Trägersignal S4 wird mit Modulationssignal S6 moduliert" in einem bestimmten bekannten Toleranzbereich liegt bzw. aller Voraussicht nach liegen wird.

Übersteigt das empfangene Signal S1, ermittelt durch den Schwellwertgeber 3, einen bestimmten Schwellwert, so wird über die Steuerung 5 mittels eines Steuersignals S7ⱼ ein Modulationsgrad des Modulators 4 dergestalt gewählt, daß die Leistung in den Seitenbändern des modulierten Signals S5 einen vorgegebenen Grenzwert gerade nicht überschreitet, bzw. trotz eventueller weiterer Annäherung des Fahrzeugs an die Bake, und damit u.U. Erhöhung des Leistungspegels des Signals S4, voraussichtlich nicht überschreiten wird.

Figur 4 verdeutlicht die mögliche Reduzierung der Seitenbandleistung durch Wahl verschiedener Modulationsgrade m.

Die Begrenzung in Stufen, im einfachsten Fall zwei verschiedene Modulationstiefen, im Gegensatz zur einer kontinuierlichen Regenerierung ist sehr viel einfacher und kostengünstiger zu realisieren und eignet sich daher insbesondere für billige Massenprodukte, wie Transponder für die geschilderten Kft-typischen Anwendungen.

Abschließend sei noch darauf hingewiesen, daß die Erfindung ebenfalls ein gerichtetes Nahbereichs-Kommunilkationsverfahren (DSRC) umfaßt, bei dem von einer stationären Bake (10) Signale zu einer mobilen Einheit (OBU) (14) in Form eines Transponders (1) unter Verwendung einer modulierten Trägerwelle (16), vorzugsweise im GHz-Bereich, gesandt werden, und Signale von dem Transponder (14; 1) zur Bake (10) rückübermittelt werden, indem ein von der Bake gesendeter, unmodulierter Träger (17) empfangen, moduliert und zurückgesendet wird, wobei
- in einem ersten Schritt die Steuerung (5) eine Schwellwertüber- bzw. unterschreitung (in Abhängigkeit des empfangenen modulierten Signals (16; 51)) registriert und diese Über-/Unterschreitung gespeichert wird, um
in einem nächsten Schritt den Modulationsgrad des Modulators (4) über geeignete Mittel, z.B. Steuersignale (S7j), in Abhängigkeit der im ersten Schritt registrierten/gespeicherten Information einzustellen.

Der Schtzumfang wird durch die folgenden Patentansprüche bestimmt.

## Patentansprüche

1. Transponder (1), insbesondere für den Datenaustausch im Nahbereich unter Verwendung von Trägerwellen im mittleren Mikrowellenbereich (DSRC), insbesondere zur Verwendung in Kraftfahrzeugen als bordeigene Einheit (OBU),
mit einer Empfangseinheit (2) und einem Modulator (4) zur Modulation eines empfangenen, unmodulierten Trägers (S4,17) mit einem Modulationssignal (S6),
**gekennzeichnet durch** Mittel zum stufenweisen Einstellen des Modulationsgrades, wobei die Empfangseinheit (2) einen Schwellwertgeber (3) aufweist, der derart ausgelegt ist, dass bei Überschreiten eines Schwellwertes für die Leistung einer empfangenen, modulierten Trägerwelle (16) ein Steuersignal zum stufenweisen Einstellen des Modulationsgrades generiert wird, wobei der Modulationsgrad derart geändert wird, dass die Seitenbandleistung nicht zu groß wird, wobei ferner Mittel zum Messen eines Leistungspegels des empfangenen Signals vorgesehen sind.

2. Transponder nach einem der vorhergehenden Ansprüche, **dadurch gekennzeichnet, daß** der Modulator (4) genau zwei verschiedene, voreingestellte Modulationsgrade aufweist.

3. Transponder nach einem der vorhergehenden Ansprüche, **gekennzeichnet durch** eine Zeitglied zum Bestimmen einer Zeitkonstanten, während derer der Modulator (4) in eine andere Modulationsstufe geschaltet wird.

4. Gerichtetes Nachbereichs-Kommunikationsverfahren (DSRC), bei dem von einer stationären Bake (10) Signale zu einer mobilen Einheit (OBU, 14) in Form eines Transponders (1) unter Verwendung einer modulierten Trägerwelle (16), vorzugsweise im GHz-Bereich, gesendet werden, und Signale von dem Transponder (14, 1) zur Bake (10) zurück übermittelt werden, indem ein von der Bake gesendeter, unmodulierter Träger (17) empfangen, moduliert und zurückgesendet wird, **dadurch gekennzeichnet, dass** in einem ersten Schritt der Leistungspegel der empfangenen, modulierten trägerwelle (16) gemessen und in Abhängigkeit von Über- oder Unterschreiten eines Schwellwertes in einem weiteren Schritt das vom Transponder (1) zurückgesendete Signal (18) mit einem in Abhängigkeit von dem Leistungspegel bestimmten, stufenweise gewählten Modulationsgrad moduliert wird, wobei der modulationsgrad derart gewählt wird, dass die Seitenbandleistung nicht zu groß wird.

5. Verfahren nach Anspruch 4, **dadurch gekennzeichnet, daß** nach dem ersten Schritt die Schwellwertüber/unterschreitunggespeichert wird, und daß in dem weiteren Schritt in Abhängigkeit von der gespeicherten Information der Modulationsgrad gewählt wird.

## Claims

1. Transponder (1), particularly for short-range data interchange using mid-range microwave carrier waves (DSRC), particularly for use in motor vehicles as an on-board unit (OBU), having a reception unit (2) and a modulator (4) for modulating a received unmodulated carrier (S4, 17) with a modulation signal (S6), **characterized by** means for gradually adjusting the degree of modulation, wherein the reception unit (2) has a threshold value transmitter (3) which is designed such that if a pressure value for the power of a received, modulated carrier wave (16) is exceeded then a control signal for gradually adjusting the degree of modulation is generated, wherein the degree of modulation is changed such that the sideband power does not become too high, wherein means for measuring a power level for the received signal are also provided.

2. Transponder according to one of the preceding claims, **characterized in that** the modulator (4) has precisely two different, preset degrees of modulation.

3. Transponder according to one of the preceding claims, **characterized by** a timer for determining a time constant during which the modulator (4) is switched to a different modulation level.

4. Dedicated short-range communication method (DSRC), in which a fixed beacon (10) sends signals to a mobile unit (OBU, 14) in the form of a transponder (1) using a modulated carrier wave (16), preferably in the GHz range, and signals are transmitted back to the beacon (10) by the transponder (14, 1) by receiving, modulating and returning an unmodulated carrier (17) sent by the beacon, **characterized in that** in a first step the power level of the received, modulated carrier wave (16) is measured and in a further step the signal (18) returned by the transponder (1) is modulated with a gradually selected degree of modulation, determined on the basis of the power level, on the basis of a threshold value being exceeded or undershot, wherein the degree of modulation is selected such that the sideband power does not become too high.

5. Method according to Claim 4, **characterized in that** the first step is followed by the threshold value transgression being stored, and **in that** in the further step the degree of modulation is selected on the basis of the stored information.

## Revendications

1. Transpondeur (1), notamment pour l'échange de données dans la zone de proximité en utilisant des ondes porteuses dans la plage centrale des hyperfréquences (DSCR), notamment destiné à être utilisé dans les véhicules automobiles en tant qu'unité embarquée propre (OBU), comprenant une unité réceptrice (2) et un modulateur (4) pour moduler une porteuse (S4, 17) non modulée reçue avec un signal de modulation (S6), **caractérisé par** des moyens de réglage par palier du degré de modulation, l'unité réceptrice (2) présentant un générateur de valeur de seuil (3) qui est conçu de telle sorte qu'un signal de commande destiné au réglage par palier du degré de modulation est généré en cas de dépassement d'une valeur de seuil pour la puissance d'une onde porteuse (16) modulée reçue, le degré de modulation étant modifié de telle sorte que la puissance de la bande latérale ne devient pas trop élevée, des moyens pour mesurer un niveau de puissance du signal reçu étant en outre prévus.

2. Transpondeur selon l'une des revendications précédentes, **caractérisé en ce que** le modulateur (4) présente exactement deux degrés de modulation préréglés.

3. Transpondeur selon l'une des revendications précédentes, **caractérisé par** un composant de temporisation pour déterminer une constante de temps pendant laquelle le modulateur (4) est commuté dans un autre niveau de modulation.

4. Procédé de communication directionnel de zone de proximité (DSCR), selon lequel des signaux sont communiqués par une balise (10) fixe vers une unité mobile (OBU, 14) sous la forme d'un transpondeur (1) en utilisant une onde porteuse (16) modulée, de préférence dans la gamme des GHz, et les signaux sont renvoyés du transpondeur (14, 1) vers la balise (10) du fait qu'une porteuse (17) non modulée émise par la balise est reçue, modulée et renvoyée, **caractérisé en ce que** dans une première étape, le niveau de puissance de l'onde porteuse (16) modulée reçue est mesuré et, suivant le franchissement vers le haut ou vers le bas d'une valeur de seuil, dans une étape supplémentaire le signal (18) renvoyé par le transpondeur (1) est modulé avec un degré de modulation déterminé, sélectionné par palier en fonction du niveau de puissance, le degré de modulation étant sélectionné de telle sorte que la puissance de la bande latérale ne devient pas trop élevée.

5. Procédé selon la revendication 4, **caractérisé en ce qu'**après la première étape, le franchissement vers le haut ou vers le bas de la valeur de seuil est mémorisé et **en ce que** dans l'étape supplémentaire, le degré de modulation est sélectionné en fonction de l'information mémorisée.
